# EUROPEAN PATENT APPLICATION

(11) **EP 1 574 554 A2**
(43) Date of publication of application: **14.09.2005**
(21) Application number: 05250644.1
(22) Date of filing: 04.02.2005
(51) Int. Cl.: C09D 133/14, C09D 175/02, C09D 175/12, C09D 5/36

(54) **Metallic base coating composition and process for producing a composite film**

(30) Priority: 09.02.2004 JP 2004031668; 09.02.2004 JP 2004031670; 09.02.2004 JP 2004031671; 09.02.2004 JP 2004031674; 09.02.2004 JP 2004031681
(71) Applicant: Nippon Paint Co., Ltd., Osaka-fu (JP)
(72) Inventor: Fuji, Hiroaki, Hiroshima-shi Hiroshima-ken (JP); Tabii, Norikuni, Hiroshima-shi Hiroshima-ken (JP); Sasaki, Shigeyuki, Hiroshima-shi Hiroshima-ken (JP)
(74) Representative: Perry, Robert Edward

(57) **Abstract**

Disclosed is a solvent-borne metallic base coating composition which comprises (A) an urea-contained acrylic resin, (B) a urethane-modified polyester resin, (C) a curing agent and (D) a luster pigment, wherein a solid weight ratio of the urea-contained acrylic resin (A) / the urethane-modified polyester resin (B) is within the range of from 60/40 to 95/5. The resin coating composition can form metallic coatings having high color phase difference between looking at high light position and looking at shade position, in particular those having high FF property, excellent appearance (surface texture) and transparency. (92 words)

## Description

### FIELD OF THE INVENTION

The present invention relates to a solvent-borne metallic base coating composition for forming finish coatings on a car body and the like and to a process for producing a composite film using the coating composition.

### BACKGROUND OF THE INVENTION

Metallic finish coatings on car bodies have generally formed by forming a metallic base coating and then coating a clear coating thereon with wet-on-wet manner and then baking the two coatings together (so-called "two-coat-one-bake system").

In the two-coat-one-bake system, although the clear paint is coated on the metallic base coating without curing the metallic coating as mentioned above, the appearance of the finish coatings looks a little different from that has been expected. The difference in appearance can be precluded by heating a metallic base coating a little (so-called "pre-heating"). However, major merit of the two-coat-one-bake system is present in that the finish composite coatings are formed by wet-on-wet without such heating (preheating) step, which enhances operability and reduces energy consumption. In order to pursue this merit of the two-coat-one-bake system, the clear paint coating step is continuously conducted without preheating after forming a metallic base coating, and thus such difference in appearance has been disregarded hitherto.

It is now believed that the difference in appearance comes from miscibility between wet surface of metallic base coating and wet clear paint coating. Accordingly, it has been studied that the miscibility is inhibited by additives formulated into paint or modification of vehicle resin.

For example, Japanese Kokai Publication Hei-8 (1996)-283612 discloses an aqueous base coat resin composition which comprises (I) polyurethane polyurea crosslinked particle dispersion obtained from a specific polyol compound, polyisocyanate compound and polyamine compound, (II) an aqueous resin having a hydroxyl group and/or a carboxyl group and (III) an aqueous curing agent reactive with hydroxyl group and/or carboxyl group. According to the disclosed invention, urea group is introduced into one of resin components, but this paint is aqueous and inherently needs preheat step after applying metallic base coating composition. The present invention is directed to a solvent-borne coating composition which can eliminate the preheating step.

Japanese Kokai Publication 2003-82280 discloses a resin composition for color paint which comprises a polyester resin having hydroxyl group, a curing agent, resin particles having inner crosslinked structure and a urea type rheology controlling agent. The paint disclosed is not directed to a resin composition which contains, as main resin, an acrylic resin, but one which contains, as main resin, polyester resin.

In addition, Japanese Kokai Publication Hei-10 (1999) -174929 discloses a process for coating, which employs a clear top coating composition comprising an aminoplast crosslinking agent and an acrylic resin having specific functional group and/or urea-type functional group. This invention is not directed to an improvement for a solvent-borne metallic base coating composition, but to an improvement for a clear paint.

In any event, conventional metallic base coating paint does not have sufficient flip-flop (FF) property which shows change of brightness (whiteness of coating) depending on angle of eyes to look. Especially, it has poor FF property and poor denseness of lustrous material in medium chromatic color being high pigment weight content (PWC).

### OBJECT OF THE INVENTION

The present invention is to provide a resin coating composition which can form metallic coatings having high color phase difference between looking at highlight position and looking at shade position, in particular those having high FF property, excellent appearance (surface texture) and transparency.

### SUMMARY OF THE INVENTION

Thus, the present invention provides a solvent-borne metallic base coating composition which comprises (A) an urea-contained acrylic resin, (B) a urethane-modified polyester resin, (C) a curing agent and (D) a luster pigment, wherein a solid weight ratio of the urea-contained acrylic resin (A) / the urethane-modified polyester resin (B) is within the range of from 60/40 to 95/5.

The present invention also provides a process for producing a composite film comprising coating a solvent-borne metallic base coating composition and then a clear paint with wet-on-wet manner on an article to be coated, wherein the solvent-borne metallic base coating composition comprises (A) an urea-contained acrylic resin, (B) a urethane-modified polyester resin, (C) a curing agent and (D) a luster pigment, and a solid weight ratio of the urea-contained acrylic resin (A) / the urethane-modified polyester resin (B) is within the range of from 60/40 to 95/5.

In the solvent-borne metallic base coating composition of the present invention, the curing agent (C) is preferably melamine resin.

The solvent-borne metallic base coating composition may further contain a component (E) selected from the group consisting of non-crosslinked polymer particles, anti-settling agent, cellulose derivative, inorganic particles and a mixture thereof.

The non-crosslinked polymer particles of the component (E) preferably have an average particle size (D50) of 0.05 to 10 µm.

The anti-settling agent of the component (E) can be polyamide, oxidized polyethylene and a combination thereof.

The cellulose derivative of the component (E) is preferably selected from the group consisting of cellulose acetate butyrate, nitrocellulose, cellulose acetate, cellulose acetate propionate and a combination thereof.

The inorganic particles of the component (E) may preferably be (a) transparent particulate barium sulfate having a primary particle size of not more than 0.1 µm, (b) particulate silica having an average particle size of 2 to 100 µm, or a combination thereof.

### DETAILED DESCRIPTION OF THE INVENTION

The solvent-borne metallic base coating composition of the present invention comprises (A) an urea-contained acrylic resin, (B) a urethane-modified polyester resin, (C) a curing agent and (D) a luster pigment, wherein a solid weight ratio of the urea-contained acrylic resin (A) / the urethane-modified polyester resin (B) is within the range of from 60/40 to 95/5.

If amounts of the urea-contained acrylic resin (A) in the solid weight ratio of resin (A) / resin (B) are less 60/40, coating appearance would enhance, but FF properties would deteriorate. If those are more than 95/5, FF properties would enhance, but coating appearance (surface texture) would deteriorate. The solid weight ratio of resin (A)/ resin (B) is preferably within the range of 65/35 to 92/8, more preferably 70/30. If amounts of the urethane-modified acrylic resin (B) in the solid weight ratio of resin (A) / resin (B) are outside the above range, miscibility with clear coating layer would increase, to result in color changing when applying the clear paint.

### Urea-contained acrylic resin (A)

The urea-contained acrylic resin can be acrylic resin having a urea bonding group (urea group), i.e. -NH-CO-NH-. The urea group can be present in an amount of 1 to 15 % by weight, preferably 2 to 12 % by weight, more preferably 3 to 10 % by weight, calculated by weight percent of urea group-introducing component in a solid amount of resulting urea-contained acrylic resin. If amounts of the urea group are more than 15 % by weight, coating appearance (surface texture) would deteriorate, and if those are less than 1 % by weight, FF properties and denseness of luster pigment would reduce. The urea-contained acrylic resin can be obtained by any art-known method and, regardless of synthetic methods or manners of the urea-contained acrylic resin, the presence of the urea group in acrylic resin imparts technical effects to the resulting metallic base coating.

For example, the urea-contained acrylic resin (A) can be prepared by reacting an isocyanate compound (1), a hydroxyl group-containing acrylic resin (2) and an amine compound (3). In this reaction, the isocyanate compound (1) and amine compound (3) are classified as the urea group-introducing components.

As detailed method therefor, the isocyanate compound (1) may be reacted with the hydroxyl group-containing acrylic resin (2) that has separately prepared, in an excess amount of isocyanate group in the isocyanate compound (1) against the one equivalent amount of hydroxyl group in the hydroxyl group-containing acrylic resin (2), and the unreacted isocyanate groups in the resulting mixture are then reacted with the amine compound (3). Also, the isocyanate compound (1) may be reacted with the amine compound (3) in an amine equivalent less than an isocyanate equivalent of the isocyanate compound (1), and then the unreacted isocyanate groups are reacted with the hydroxyl group-containing acrylic resin (2). In addition, the urea-contained acrylic resin (A) can be prepared by polymerizing an acrylic monomer and a urea group-containing monomer (e.g. an alkyl ester of acrylic or methacrylic acid with urea group). Further, the urea-contained acrylic resin (A) can also be prepared by reacting an acrylic polymer using an isocyanate-containing acrylic monomer with an amine compound. If necessary, the urea-contained acrylic resin (A) may be synthesized in a coating composition containing another binder resin and/or curing agent for paint.

The urea group can form pseudo-crosslinking network in paint due to hydrogen bond to impart thixotropic properties to paint, and it is also preferred that, after curing the paint, the urea group is incorporated into resin matrix not to exhibit any harmful effect. The thixotropic properties by urea group are not or barely affected by water and/or organic solvent present in the paint and keep its properties effectively. The thixotropic properties are also barely affected by temperatures and can be properly functioned even at an elevated temperature for baking the paint, such as 60 to 260 °C.

The reaction using the above three components (1) to (3) can be conducted in an equivalent ratio of isocyanate reactive group / isocyanate group of 0.5 to 2.0, preferably 0.7 to 1.5, more preferably 0.8 to 1.2. In particular, a reaction between the isocyanate compound and the amine compound may be conducted in a ratio of number of amine group / number of isocyanate group of 0.7 to 1.5, preferably 0.9 to 1.1, although either isocyanate compound or amine compound is used in an excess amount more than stoichiometric amount.

The reaction between the isocyanate compound and the amine compound can be conducted by any method wherein reactive components are mixed optionally at an elevated temperature. The reaction temperature can be within the range of 10 to 150 °C, preferably 20 to 80 °C. A method of mixing the two components can be conducted by any art-known process, but it is preferred to add the isocyanate compound to the amine compound. The addition of the isocyanate compound can be conducted with one or more steps, if necessary. The reaction of the two compounds can generally be conducted in the presence of a solvent, such as acetone, methyl isobutyl ketone, 1-methoxy-2-propanol, benzene, toluene, xylene and aliphatic hydrocarbon (such as, petroleum ether).

The urea-contained acrylic resin (A) may preferably have a weight average molecular weight (Mw) of 3,000 to 150,000, more preferably 4,000 to 130,000. Molecular weights of less than 3,000 reduce coating workability and miscibility with clear paint, and those of more than 150,000 reduce non-volatile content when applying to result in poor workability. The "molecular weight" in the present specification is determined by GPC (gel permeation chromatography) with styrene polymer using as a standard.

In addition, the urea-contained acrylic resin (A) may preferably have a hydroxyl value (solid content) of 30 to 180, more preferably 50 to 150. Amounts of more than 180 reduce water resistance of coated film and those of less than 30 reduce crosslinkability of coated film. Further, the urea-contained acrylic resin (A) may preferably have an acid value (solid content) of 5 to 30 mgKOH/g, more preferably 8 to 25 mgKOH/g. Acid values of more than 30 mgKOH/g reduce water resistance of coated film and those of less than 5 mgKOH/g reduce crossliknability of coated film.

It is also preferred that the urea-contained acrylic resin (A) of the present invention has a glass transition temperature (Tg) of -10 to 30 °C, preferably 0 to 25 °C. Transition temperatures outside the above range reduce physical properties of coated film.

The isocyanate compound (1) can be alicyclic, arylaliphatic or aromatic compound. Preferred isocyanate compound (1) includes diisocyanate or a isocyanurate thereof (trimer of diisocyanates).

The diisocyanate can be one having 5 to 24 carbon atoms, preferably 6 to 18 carbon atoms.

Examples of the diisocyanates are aliphatic or alicyclic diisocyanates, such as trimethylene diisocyanate, tetramethylene diisocyanate, hexamethylene diisocyanate, 2,2,4-trimethylhexamethylene diisocyanate, undecane diisocyanate(1,11), lysine ester diisocyanate, cyclohexane-1,3- or 1,4-diisocyanate, 1-isocyanato-3-isocyantomethyl-3,5,5-trimethylcyclohexane (IPDI), 4,4'-diisocyanatodicyclodicyclomethane, ω,ω'-dipropyl ether diisocyanate, thiodipropyl diisocyanate, cyclohexyl-1,4-diisocyanate, dicyclohexylmethane-4,4'-diisocyanate and dicyclohexyldimethylmethane-4,4-diisocyanate; aromatic diisocyanates, such as 1,5-dimethyl-2,4-bis(isocyanatomethyl) benzene, 1,5-trimethyl-2,4-bis(ω-isocyanatoethyl) benzen, 1,3,5-trimethyl-2,4-bis(isocyanatomethyl) benzene, 1,3,5-triethyl-2,4-bis(isocyanatomethyl) benzene, 2,4-toluene diisocyanate, 2,6-toluene diisocyanate, diphenylmethane-4,4'-diisocyanate; and a mixture thereof.

The isocyanurate can be a trimer of the above listed diisocyanates. The isocyanate compound (1) can be a combination of the above isocyanate and the isocyanurate.

The hydroxyl group-containing acrylic resin (2) of the present invention can be prepared by copolymerizing an ethylenically unsaturated monomer having an hydroxyl group with another ethylenically unsaturated monomer and preferably has a number average molecular weight (Mn) of 1,000 to 8,000, more preferably 1,200 to 6,000. Number average molecular weights of less than 1,000 reduce workability and miscibility with clear paint and those of more than 8,000 reduce workability because of too low non-volatile content. The number average molecular weight is most preferably 1,500 to 5,000 in view of coating appearance.

The acrylic resin (2) may preferably have a hydroxyl value (solid content) of 40 to 180, more preferably 50 to 150. Hydroxyl values of more than 180 reduce water resistance in coated film and those of less than 40 reduce crosslinkability in coated film. Also, the acrylic resin preferably has an acid value of 7 to 32 mgKOH/g, more preferably 10 to 27 mgKOH/g. Acid values of more than 32 MgKOH/g reduces water resistance in coated film and those of less than 7 mgKOH/g reduce crosslinkability in coated film.

The hydroxyl group-containing acrylic resin (2), as mentioned above, can be prepared by copolymerizing an ethylenically unsaturated monomer having an hydroxyl group with another ethylenically unsaturated monomer, but an amount of the hydroxyl group-containing ethynically unsaturated monomer are 5 to 60 % by weight, preferably 8 to 50 % by weight and an amount of the other ethylenically unsaturated monomer is 95 to 40 % by weight, preferably 92 to 50 % by weight, % by weight being based on total weight of the monomers. If the hydroxyl group-containing ethylenically unsaturated monomer is less than 5 % by weight, producing stability would deteriorate and if it is more than 60 % by weight, water resistance in coated film would reduce.

Examples of the hydroxyl group-containing ethylenically unsaturated monomers are 2-hydroxyethyl (meth)acrylate, 2-hydroxypropyl (meth)acrylate, 4-hydroxybutyl (meth)acrylate, allyl alcohol, methacryl alcohol, an adduct of 2-hydroxyethyl (meth)acrylate and ε-caprolactone and the like. More preferred monomer is 4-hydroxybutyl (meth)acrylate or an adduct of 2-hydroxyethyl (meth)acrylate and ε-caprolactone.

The other ethylenically unsaturated monomer is not limited, but includes an ethylenically unsaturated monomer having a carboxyl group, such as (meth)acrylic acid derivative (e.g. acrylic acid, methacrylic acid, crotonic acid, isocrotonic acid, acrylic acid dimer and an adduct of acrylic acid and ε-caprolactone, i.e. α-hydro-ω-((1-oxo-2-propenyl)oxy)poly(oxy(1-oxo-1,6-hexanediyl))), and unsaturated dibasic acid (e.g. maleic acid, fumaric acid, itaconic acid) and the like.

Other examples of the non-hydroxyl monomers are (meth)acrylate ester (e.g. methyl (meth)acrylate, ethyl (meth)acrylate, n-butyl (meth)acrylate, isobutyl (meth)acrylate, t-butyl (meth)acrylate, 2-ethylhexyl (meth)acrylate, lauryl (meth)acrylate, phenyl (meth)acrylate, isobornyl (meth)acrylate, cyclohexyl (meth)acrylate, t-butylcyclohexyl (meth)acrylate, dicyclopentadienyl (meth)acrylate, or the like), polymerizable ketone (e.g. vinyl ketone), polymerizable aromatic compound (e.g. styrene, α-methyl styrene, t-butyl styrene, p-chlorostyrene, vinyl naphthalene or the like), polymerizable nitrile (e.g. acrylonitrile, methacrylonitrile or the like), α-olefin (e.g. ethylene, propylene or the like), vinyl ester (e.g. vinyl acetate, vinyl propionate), diene (e.g. butadiene and isoprene), optionally isocyanate group-containing monomer and the like. The other ethylenically unsaturated monomers can be used alone or in combination of two or more sorts.

The preparation of the hydroxyl group-containing acrylic resin (2) can be an art-known polymerization process, such as solution radical polymerization and the like. For example, a monomer mixture and a suitable radical polymerization initiator may be added dropwise in a suitable solvent with stirring at a polymerization temperature of 60 to 160 °C for 2 to 10 hours. The radical polymerization initiator used herein is not limited, but is one that is usually used for radical polymerization, such as azo-type compound, peroxide and the like. An amount of the polymerization initiator may generally be within the range of 0.1 to 18 % by weight, preferably 0.5 to 15 % by weight based on a total amount of the unsaturated monomers.

The solvent to be employed can be anyone as long as it does not adversely affect on the reaction, including esters, ketones, hydrocarbones and the like. In the preparation, a chain transfer agent, such as mercaptane (e.g. lauryl mercaptane), α-methylstyrene dimer or the like can be added for controlling molecular weight.

The amine compound (3) employed for the preparation of the urea-contained acrylic resin (A) can preferably be ether amine or primary amine which has carbon atoms of not more than 55, preferably 1 to 24, more preferably 1 to 12.

Examples of the ether amines may contain at least one hydroxyl group and include 2-methoxyethylamine, 2-ethoxyethylamine, 3-methoxy-1-propylamine, 1-methoxymethylpropylamine, 1,1-dimethoxy-2-propylamine3-ethoxy-1-propylamine, 3-butoxy-1-propylamine, 3-(2-ethylhexyloxy)-1-propylamine3-tridecyloxypropylamine, 3-stearyloxypropylamine, p-methoxybenzylamine, 3,4-dimethoxybenzylamine, p-methoxyphenylethylamine, 3,4-dimethoxyphenyl-ethylamine, 9-phenoxy-4,7-dioxanone-1-amine, 2-methyl-4-methoxyaniline, 2,5-dimethoxy-aniline, furfurylamine, tetrahydrofrufurylamine, 2-(4-morpholinyl)ethylamine, 4-(3-aminopropyl) morpholine, 4,7-dioxadecane-1,10-diamine, 4,9-dioxadecane-1,12-diamine, 7-methyl-4,10-dioxatridecane-1,13-diamine, 4,7,10-trioxatridecane-1,13-diamine, bis(3-aminopropyl)polytetrahydrofuran (molecular weight about 750), and a mixture thereof.

The primary amine may be art-know, but can be one that has at least one primary amine group and at least one ether group and/or hydroxyl group. Examples of the primary amines are ethanolamine, 6-aminohexanol, methoxypropylamine, 3,4-dimethoxyphenylethylamine, benzylamine, ethylamine, n-propylamine, sec-propylamine, n-butylamine, sec-butylamine, t-butylamine, n-pentylamine, α-methylbutylamine, α-ethylpropylamine, β-ethylbutylamine, hexylamine, octylamine, decylamine, stearyamine, cyclohexylamine, aniline, hexamethylenediamine and a mixture thereof.

The urea-contained acrylic resin (A) may be present in the coating composition in an amount of 20 to 65 parts by weight, preferably 25 to 60 parts by weight, based on 100 parts of solid content of coating composition. Amounts of less than 20 parts by weight reduce FF properties and those of more than 65 parts by weight reduce appearance in coated film.

### Urethane-modified polyester resin (B)

The urethane-modified polyester resin (B) can be prepared by reacting an acid component, such as polyhydric carboxylic acid and/or anhydride thereof, with polyhydric alcohol to form a polyester resin having a hydroxyl group and then reacting it with a diisocyanate compound in conditions of hydroxyl group excess. The urethane-modified polyester resin (B) preferably has at least two hydroxyl groups in one molecule.

The urethane-modified polyester resin (b) may preferably have a weight average molecular weight of 2,000 to 20,000, more preferably 3,000 to 15,000. If the weight average molecular weight is less than 2,000, workability and miscibility with clear paint in wet-on-wet coating are deteriorated. If it is more than 20,000, workability would deteriorate when applying because of too low non-volatile content.

The urethane-modified polyester resin (B) may preferably have a hydroxyl value (solid content) of 30 to 180, more preferably 40 to 160. If the hydroxyl value is more than 180, water resistance would reduce in coated film and if it is less than 30, crosslinkability would deteriorate in coated film. It may also have an acid value (solid content) of 2 to 20 mgKOH/g, preferably 3 to 15 mgKOH/g. Acid values of more than 20 mgKOH/g reduce water resistance in coated film and those of less than 2 mgKOH/g lower crosslinkability in coated film.

The urethane-modified polyester resin (B) may preferably have a glass transition temperature (Tg) of -10 to 70 °C, more preferably -5 to 50 °C. If the glass transition temperature is less than -10 °C, coating hardness would reduce and if it is more than 70 °C, workability would deteriorate because of low solid content of paint.

The polyester resin is generally prepared by polycondensation of acid component, such as polyhydric carboxylic acid and/or acid anhydride thereof with polyhydric alcohol.

The polyhydric carboxylic acid and/or acid anhydride thereof is not limited, but includes phthalic acid, isophthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, hymic acid anhydride, trimellitic acid, trimellitic anhydride, pyromellitic acid, pyromellitic anhydride, terephthalic acid, maleic acid, maleic anhydride, fumaric acid, itaconic acid, adipic acid, azelaic acid, sebacic acid, succinic acid, succinic anhydride, dodecenylsuccinic acid, dodecenylsuccinic anhydride, a mixture thereof and the like.

The polyhydric alcohol is not limited, but includes ethylene glycol, diethylene glycol, polyethylene glycol, propylene glycol, dipropylene glycol, polypropylene glycol, neopentyl glycol, 1,2-butanediol, 1,3-butanediol, 1,4-butanediol, 2,3-butanediol, 1,5-penntanediol, 1,6-hexanediol, 1,4-cyclohexanediol, 2,2-dimethyl-3-hydroxypropyl-2,2-dimethyl-3-hydroxypropionate, 2,2,4-trimethyl-1,3-pentanediol, polytetramethylene ether glycol, polycaprolactone polyol, glycerol, sorbitol, annitol, trimethylolethane, trimethylolpropane, trimethylolbutane, hexanetriol, pentaerythritol, dipentaerythritol, a mixture thereof and the like.

In addition to the above mentioned acid component and polyhydric alcohol, another reactant may be formulated. Examples of the other reactants are monocarboxylic acid, hydroxycarboxylic acid, lactone, drying oil, semidrying oil, fatty acid of drying oil or semidrying oil, mono-epoxide (such as Cardura E available from Shell Chemical Co.), a mixture thereof and the like. The lactone is a compound which is ring-opened and reacted with polyester to form graft chain, including β-propiolactone, dimethylpropiolactone, butylolactone, γ-valerolactone, ε-caprolactone, γ-caprolactone, γ-caprylolactone, crotolactone, δ-valerolactone, δ-caprolactone and the like. Preferred lactone is ε-caprolactone.

The diisocyanate compound to be reacted with the hydroxyl group-containing polyester resin is a compound which has at least two free isocyanate groups in one molecule, including aliphatic diisocyanate, such as trimethylhexamethylene diisocyanate, hexamethylene diisocyanate, lisin diisocyanate and trimethylene diisocyanate; alicyclic diisocyanate, such as isophorone diisocyanate, methylenebis(cyclohexylisocyanate) and cyclohexane diisocyanate; aromatic diisocyanate, such as xylene diisocyanate, tolylene diisocyanate, diphenylmethane diisocyanate, naphthalene diisocyanate and biphenylene diisocyanate; and the like. The diisocyanate can be employed alone or in combination of two or more sorts.

Preferred diisocyanate compound is aliphatic diisocyanate, such as hexamethylene diisocyanate, trimethylhexamethylene diisocyanate, cyclohexane-1,4-diisocyanate, dicyclohexylmethane-4,4-diisocyanate, methylchclohexane diisocyanate or the like.

The reaction between the hydroxyl group-containing polyester and the diisocyanate compound can be conducted by art-known urethane forming conditions.

The urethane-modified polyester resin (B) can be present in the coating composition in an amount of 5 to 40 parts by weight, preferably 8 to 25 parts by weight, based on 100 parts by weight of solid content of coating resin.

### Curing agent (C)

The curing agent (C) of the present invention may include melamine resin, blocked isocyanate compound or the like, but melamine resin is preferred. The melamine resin is not limited, but includes methylated melamine, bulylated melamine or methylated and butylated mixed melamine resin. Examples of the melamine resins are Cymel 303 and Cymel 254 (both available from Nippon Cytech Co., Ltd.), Uban 20N60 and Uban 128 (both available from Mitsui Chemical Co., Ltd.), Sumimal series (available from Sumitomo Chemical Co., Ltd.) and the like.

An amount of the melamine resin may be within the range of 20 to 100 parts by weight, preferably 40 to 90 parts by weight, based on 100 parts by weight of solid content of film-forming resin including urea-contained acrylic resin (A) and urethane-modified polyester resin. Amounts of less than 20 parts by weight lower curing ability and those of more thane 100 parts by weight increase hardness of cured film too high and reduces chipping resistance.

The blocked isocyanate compound as the curing agent (C) may be produced by attaching a blocking agent to polyisocyanate compound. The blocked isocyanate compound deblocks by heating to release blocking agent and to re-generate free isocyanate group which is reacted with a functional group present in the acrylic resin.

The polyisocyanate compound is not limited, but includes aliphatic diisocyanate, such as trimethylene diisocyanate,tetramethylene diisocyanate,pentamethylene diisocyanate, hexamethylene diisocyanate, and trimethylhexamethylene diisocyanate; alicyclic diisocyanate, such as 1,3-cyclopentanediisocyanate, 1,4-cyclohexane diisocyanate, 1,2-cyclohexane diisocyanate, isophorone diisocyanate, and norbornane diisocyanatomethyl; aromatic diisocyanate, such as xylylene diisocyanate, 2,4-tolylene diisocyanate, and 2,6-tolylene diisocyanate; a nurate thereof; a mixture thereof; and the like.

The blocking agent may include aliphatic, aromatic or heterocyclic alcohols, such as methanol, ethanol, n-propanol, isopropanol, furfuryl alcohol, alkyl-substituted furfuryl alcohol and benzyl alcohol; phenols, such as phenol,and methyl phenol; oximes, such as methyl ethyl ketone oxime, methyl isobutyl ketone oxime, acetone oxime and chclohexanone oxime; active methylene compound, such as acetyl acetone, ethyl acetoacetate and ethyl maronate; caprolactame; and the like.

In case where the blocked isocyanate compound is employed in the coating composition of the present invention, the blocked isocyanate compound may be present in the coating composition in an amount of 20 to 100 parts by weight, based on 100 parts by weight of solid content of the film-forming resin including urea-contained acrylic resin and urethane-modified polyester resin. If the amount is outside the above range, curing ability is insufficient.

### Luster pigment (D)

The luster pigment (D) is not limited in shape and can be colored, but preferably including scale-like shape having an average diameter (D50) of 2.0 to 50 µm and a thickness of 0.1 to 5.0 µm. Average diameter (D50) of 10 to 35 µm is more preferred because of high lustrous appearance.

The pigment content (PWC) of the luster pigment in the coating composition may generally be not more than 23 % by weight, preferably within the range of 0.01 to 20.0 % by weight, more preferably 0.01 to 18.0 % by weight, based on the solid content of the coating composition. Contents of more than 23 % by weight deteriorate coating appearance.

Examples of the luster pigments are colored or uncolored metallic lustrous material of metal or alloy, interference mica, colored mica, white mica powder, graphite, colored or uncolored plate pigment, and a mixture thereof. Preferred are colored or uncolored metallic lustrous material of metal or alloy, interference mica, colored mica, white mica powder and a mixture thereof, in view of dispersibility and transparent appearance of coating. The metal of the metallic material is not limited, but includes aluminum, aluminum oxide, copper, zinc, iron, nickel, tin or the like.

The luster pigment (D) may be combined with color pigment. Examples the color pigments are organic pigment, such as azochelate type pigment, insoluble azo type pigment, condensed azo type pigment, diketo-pyrrolopyrrole type pigment, benzimidazolone type pigment, phthalocyanine type pigment, indigo type pigment, perynone type pigment, perylene type pigment, dioxane type pigment, quinacridone type pigment, isoindorinone type pigment and metal chelate type pigment; inorganic pigment, such as chrome yellow, yellow iron oxide, red oxide, carbon black and titanium oxide; and the like. Filler pigment, such as calcium carbonate, barium sulfate, clay, talc and the like can also be employed.

The total pigment content (PWC) of the metallic pigment and the other pigment in the metallic paint may be within the range of 0.1 to 50 % by weight, preferably 0.5 to 40 % by weight, more preferably 1.0 to 30 % by weight, based on the solid content of the coating composition. Pigment contents of more than 50 % by weight deteriorate coating appearance.

### Component (E)

The solvent-borne metallic base coating composition of the present invention may optionally contain a component (E) which is selected from the group consisting of non-crosslinked polymer particles, anti-settling agent, cellulose derivative, inorganic particles and a mixture thereof. The component (E) not only enhances or facilitates the technical effects of the present invention, such as denseness of lustrous appearance, excellent FF property and immiscibility between metallic base coating and clear coating, but also each of the component (e) itself exhibits particular technical effects. For example, the non-crosslinked polymer particles inhibit miscibility between metallic base coating and clear coating to prevent from color changing. The anti-settling agent significantly improves storage stability of the composition and the cellulose derivative enhances denseness of lustrous appearance and FF properties. The inorganic particles inhibit non-uniformity of coating appearance. Hereinafter each of the component (E) will be explained.

### Non-crosslinked polymer particles

The non-crosslinked polymer particles employed in the solvent-borne metallic base coating composition of the present invention are those that are obtained by polymerizing polymerizable monomers into particulate shape and are not three-dimentionally crosslinked. The non-crosslinked polymer particles may be prepared by copolymerizing polymerizable monomers in a mixture of organic solvent and dispersion stabilizing resin. Accordingly, the non-crosslinked polymer particles can be a mixture of the dispersion stabilizing resin, organic solvent and non-crosslinked polymer particles.

Amounts of the dispersion stabilizing resin and the polymerizable monomers for the non-crosslinked polymer particles may not be limited depending on purpose of polymer particles, but the dispersion stabilizing resin may be present within the range of 3 to 70 % by weight, preferably 5 to 60 % by weight and polymerizable monomers may be present within the range of 97 to 30 % by weight, preferably 95 to 40 % by weight, both based on the total weight of the dispersion stabilizing resin and polymerizable monomers. An amount of the dispersion stabilizing resin and polymerizable monomers in the organic solvent solution may be 30 to 80 % by weight, preferably 40 to 60 % by weight, based on the total weight of the polymerization solution.

The polymerizable monomers for preparing the non-crosslinked polymer particles in the present invention can be unsaturated monomers that are radically polymerizable. If necessary, the dispersion stabilizing resin may also be prepared from polymerizable monomer. The polymerizable monomers for the non-crosslinked polymer particles and the dispersion stabilizing resin may preferably have a functional group for curing reaction in coating composition. The functional groups in the non-crosslinked polymer particles would react with the curing agent when heat to cure the coating composition, to incorporate into three-dimensionally crosslinked network. Examples of the function groups are hydroxyl group, carboxyl group, sulfonic group, glycidyl group, isocyanate group and the like.

The dispersion stabilizing resin can be anyone that assists stability of non-crosslinked polymer particles in organic solvent. It includes acrylic resin, polyester resin, polyether resin, polycarbonate resin, polyurethane resin and preferably has a hydroxyl value of 10 to 250, more preferably 20 to 180, an acid value of 0 to 100 mgKOH/g, more preferably 1 to 50 mgKOH/g, and a number average molecular weight of 800 to 100,000, more preferably 1,000 to 20,000. Those of more than the upper limit reduce handling properties of the resin and that of the particles, and those of less than the lower limit make resin separated from coated film and deteriorate stability of particles.

The non-crosslinked polymer particles may be present in the coating composition in an amount of 1 to 20 parts by weight, preferably 2 to 18 parts by weight, based on 100 parts by weight of the resin solid of the coating composition. Amounts of the particles of less than 1 part by weight may arise layer mixing with clear layer at an interface and those of more than 20 parts by weight deteriorate workability due to low solid content of coating composition.

The dispersion stabilizing resin may be synthesized by any method, but may be synthesized by radical polymerization, condensation polymerization and addition polymerization and the like. In case where the dispersion stabilizing resin is prepared by radical polymerization of monomers, the monomer may be selected depending on the properties of the resultant resin, but may preferably have a functional group (e.g. hydroxyl group, acid group) as the monomers for the non-crosslinked polymer particles have. The functional group may also be glycidyl group, isocyanate group or the like.

The non-crosslinked polymer particles of the present invention may be prepared by polymerizing radically polymerizable monomers in the presence of the dispersion stabilizing resin. The non-crosslinkable polymer particles preferably have hydroxyl value of 40 to 400, more preferably 50 to 200, an acid value of 1 to 200 mgKOH/g, more preferably 2 to 50 mgKOH/g and an average particles size D₅₀ of 0.05 to 10 µm, more preferably 0.1 to 2 µm. Those of less than the above lower limit do not maintain particulate shape and those of more than the upper limit deteriorate dispersion stability when formulated into paint.

Examples of the polymerizable monomers with functional group for the non-crosslinked polymer particles are listed as follow. The polymerizable monomer having hydroxyl group includes hydroxyethyl (meth)acrylate, hydroxypropyl (meth)acrylate, hydroxybutyl (meth)acrylate, hydroxymethyl methacrylate, allyl alcohol, an adduct of hydroxyethyl methacrylate and ε-caprolactone, and the like.

Examples of the polymerizable monomer with acid group are one with carboxyl group, such as (meth)acrylic acid, crotonic acid, 3-butenoic acid, 4-pentenoic acid, 2-methyl-3-butenoic acid, itaconic acid, maleic anhydride, fumaric acid and the like; and one with sulfonic acid, such as t-butylacrylamide sulfonic acid and the like. Preferred acid group for the acid containing polymerizable monomers is carboxylic acid.

Examples of the polymerizable monomer with epoxy group are glycidyl (meth)acrylate and examples of the monomers with isocyanate group are m-isopropenyl-α,α-dimethylbenzyl isocyanate, isocyanatoethyl acrylate and the like.

The polymerizable monomer without functional group can be employed for preparing the non-crosslinked polymer particles and examples thereof are alkyl (meth)acrylate, such as methyl (meth)acrylate, ethyle (meth)acrylate, isopropyl (meth)acrylate, n-propyl (meth)acrylate, n-butyl (meth)acrylate, t-butyl (meth)acrylate, isobutyl (meth)acrylate, 2-ethylhexyl (meth)acrylate, n-octyl (meth)acrylate, lauryl (meth)acrylate, stearyl (meth)acrylate, tridecyl (meth)acrylate, and the like; an adduct of fatty acid and (meth)acrylate having oxirane structure, such as an adduct of stearic acid and glycidyl (meth)acrylate and the like; an adduct of an oxirane compound having an alkyl group of at least three carbon atoms and (meth)acrylic acid; styrene derivative, such as styrene, α-methylstyrene, o-methylstyrene, m-methlstyrene, p-methylstyrene, p-t-butylstyrene; benzyl (meth)acrylate; itaconic ester, such as dimethyl itaconate; maleic ester, such as dimethyl maleate; fumaric ester, such as dimethyl fumarate; nitrile, such as acrylonitrile and methacrylonitrile; methyl isopropenyl ketone; binyl acetate; Veova monomer (available from Shell Chemical Co., Ltd.); vinyl propionate; vinyl pivarate; olefin, such as ethylene, propylene, butadiene; N,N-dimethylaminoethyl acrylate; N,N-dimethylaminoethyl methacrylate; acrylamide; vinyl piridine; and the like.

The polymerization reaction for the non-crosslinked polymer particles can be conducted in the presence of radical polymerization initiator. Examples of the radical polymerization initiators are azo type initiators, such as 2,2'-azobisisobutylonitrile, 2,2'-azobis(2,4-dimethylvaleronitrile) and the like; and peroxides, such as benzoyl peroxide, lauryl peroxide, t-butyl peroctoate and the like. An amount of the polyemerization initiator is within the range of 0.2 to 10 parts by weight, preferably 0.5 to 5.0 parts by weight, based on 100 parts by weight of a total of polymerizable monomers. The polymerization reaction may be conducted at a temperature of 60 to 160 °C for about one to 15 hours in an organic solvent containing the dispersion stabilizing resin.

The non-crosslinked polymer particles, unlike crosslinked particles, show particulate shape in paint composition, but does not form particulate shape in coated film. Since the non-crosslinked polymer particles are not crosslinked inside, the particulate shape of the particles changes during baking process and the particles are incorporated into resin component.

However, if the non-crosslinked polymer particles are formulated into paint composition by themselves, structural viscosity would rarely generate.

As the non-crosslinked polymer particles, NAD (non-aqueous dispersion) polymer resin particles which are explained in Coloring Material, volume 48, (1975) pp 28-34 may be employed.

### Anti-settling agent

The anti-settling agent employed in the solvent-borne metallic base coating composition of the present invention may preferably include (1) polyamide and/or (2) oxidized polyethylene. The polyamide (1) and oxidized polyethylene (2) are both known as viscosity controlling agent providing thixotropic properties. According to the present invention, the anti-settling agent can be formulated into metallic paint to prevent flake type luster pigment (e.g. aluminum flake) from settling out to form hard cake during storage.

An amount of the anti-settling agent can be within the range of 0.1 to 5.0 parts by weight, 0.2 to 3.0 parts by weight, based on 100 parts by weight of solid contents of paint composition. In case where either polyamide (1) or oxidized polyethylene (2) is employed solely, an amount can also be within the range of 0.1 to 5.0 parts by weight, 0.2 to 3.0 parts by weight, based on 100 parts by weight of solid contents of paint composition. Amounts of more than 5.0 parts by weight reduce solid content of the paint composition and those of less than 0.1 part by weight deteriorate paint stability.

In case where both the polyamide (1) and oxidized polyethylene (2) are employed, an amount of the both settling agents can also be within the range of 0.1 to 5.0 parts by weight, 0.2 to 3.0 parts by weight, based on 100 parts by weight of solid contents of paint composition. Amounts of more than 5.0 parts by weight give rise to unevenness of coating surface to result in poor coating appearance and those of less than 0.1 part by weight deteriorate paint stability.

The polyamide (1) employed in the present invention may include fatty acid amide and be available as powder or paste. The paste type polyamide may be diluted with a solvent, such as xylene or alcohol.

The fatty acid amide can be diamide having the following chemical structure (1):

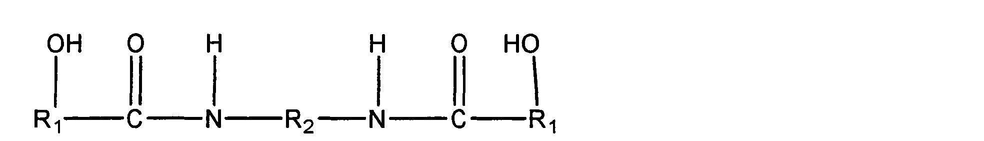

The above diamide may be prepared by reacting a diamine with hydroxyl group-containing fatty acid. In the chemical formula (1), R₁ represents a residue of a hydroxyl group-containing fatty acid from which a hydroxyl group and carboxyl group are removed and R₂ represent a residue of a diamine from which two amino groups are removed. In the above diamide (1), a fatty acid amide in which either one of OH groups attached to the terminal R₂ is not present can also be known as viscosity controlling agent and employed in the present invention.

Another example of the fatty acid amide is a polyamide having the following chemical structure (2):

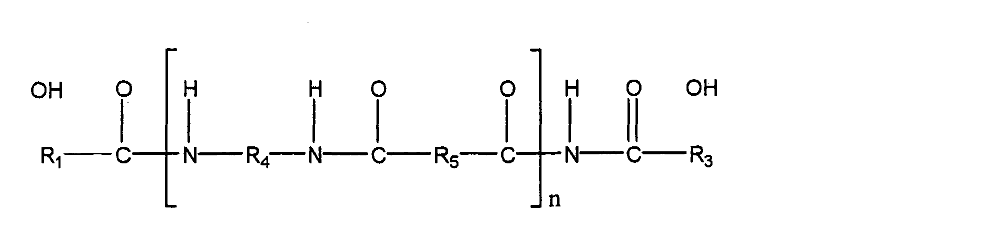

The polyamide (2) may be prepared by reacting polybasic carboxylic acid and diamine and hydroxyl group-containing fatty acid. In the chemical formula (2), R₃ and R₄ are the same as R₁ and R₂ respectively, and R₅ represents a residue of polybasic carboxylic acid from which a carboxyl group is removed. A polymerization degree of the polyamide may be within the range of 3 to 5 and a number average molecular weight of the polyamide may also be within the range of 1,000 to 2,000.

The fatty acid amide of the present invention can be either diamide (1) or polyamide (2), or a combination thereof. The fatty acid amide is commercially available as Flow-non HR-2 (a mixture of diamide and polyamide) available from Kyoei Chemical Co., Ltd., Dispalon 6900-20X (diamide) or Dispalon 6840-10X (a mixture of diamide and polyamide) available from Kusumoto Chemical Co., Ltd. and the like.

The oxidized polyethylene (2) may be colloidal swell dispersion containing oxidized polyethylene particles, which shows anti-settling properties or rheology improvement properties.

The oxidized polyethylene (2) may be one having the following chemical formula (3):

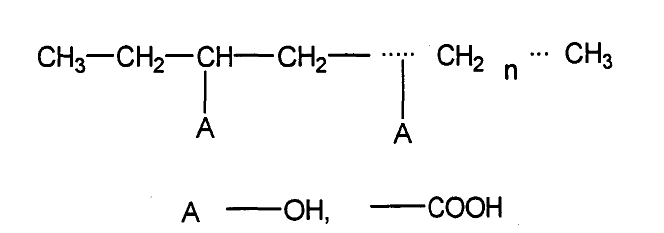

The oxidized polyethylene may have a molecular weight of 3,000 to 5,000, in view of compatibility of metallic paint.

The oxidized polyethylene (2) has plural of -OH groups in its molecule and the polyamide (1) has plural of -NH group in its molecule. The OH group and NH group are independently or together bound by hydrogen bond to form weak network therebetween. In particular, the polyamide (1) is net-worked or more strongly bound in the presence of the oxidized polyethylene (2).

The network structure can be swiftly reformed after it is destroyed by external force. The network structure can inhibit swelling or settlement of polyamide even the metallic paint is diluted with solvent and left for a long period of time. Since the network structure inhibits settlement of polyamide and in turn luster pigment, the metallic paint of the present invention has excellent stability even in diluted form.

The oxidized polyethylene (2) may be available Kusumoto Chemicals Ltd. as Dispalon 4200-10, Dispalon 4200-20 and the like.

When a combination of polyamide and oxidized polyethylene is employed, the blend of the combination is also available from Kusumoto Chemicals Ltd. as Dispalon NS 5210, Dispalon NS 5310 and the like.

### Cellulose derivative

The cellulose deivative is not limited, but is preferably selected from a group consisting of cellulose acetate butylate, nitrocellulose, cellulose acetate, cellulose acetate propionate and the like. More preferred is cellulose acetate butylate, in view of solubility with resin, control of viscosity and the like. The cellulose derivative may preferably have an acetylation degree 1 to 34 % by weight, a butylylation degree of 16 to 60 % by weight, both determined by ASTM-D-817, and a viscosity of 0.005 to 20 seconds, preferably 0.01 to 5 seconds, determined by ASTM-D-1343. If the viscosity is less than 0.005 seconds, FF properties are deteriorated.

The cellulose derivative may be formulated in the coating composition in an amount of 0.1 to 10 parts by weight, preferably 0.2 to 7.0 parts by weight, more preferably 0.5 to 5.0 parts by weight, based on 100 parts by weight of resin solid content of the coating composition. Amounts of less than the lower limit deteriorate workability and those of more than the upper limit deteriorate workability due to low solid content of paint when applying.

Examples of the cellulose acetate butylates are CAB-551-0.01 (viscosity = 0.01 second; butylyl group content = 53 %), CAB-551-0.02 (viscosity = 0.02; butyly group content = 52 %), CAB-531-1 (viscosity = 1.90; butylyl group content = 50 %), CAB-500-1 (viscosity = 1.00 second; butylyl group content = 51 %), CAB-500-5 (viscosity = 5.00 seconds; butylyl group content = 51 %), CAB-553-0.4 (viscosity = 0.03 seconds; butylyl group content = 46 %), CAB-381-0.1 (viscosity = 0.10 second; butylyl group content = 38 %), CAB-381-0.5 (viscosity = 0.50 second; butylyl group content = 38 %), CAB-381-2 (viscosity = 2.00 second; butylyl group content = 38 %), CAB-321-0.1 (viscosity = 0.10 second; butylyl group content = 31.2 %), CAB-171-15S (viscosity = 15.00 second; butylyl group content = 17 %), a mixture thereof and the like, all being available from Eastman Chemical Product Co.

The nitrocellulose is not limited and can be any one which has been employed in paint field, but it preferably has a viscosity of not less than 1 second, more preferably 2 to 10 seconds. Nitrocellulose with a viscosity of less than 1 second deteriorates FF properties and one with more than 20 seconds deteriorates workability due to too high viscosity of coating composition.

Examples of nitrocellulose are HIG1/16 (viscosity = 1.0 to 1.5 seconds, determined at a solid content of 25.0 %), HIG1/8 (viscosity = 2.0 to 2.9 seconds, determined at a solid content of 25.0 %), HIG1/4 (viscosity = 3.0 to 6.0 seconds, determined at a solid content of 25.0 %), HIG1/2 (viscosity = 3.0 to 4.9 seconds, determined at a solid content of 20.0 %), HIG1 (viscosity = 6.0 to 8.0 seconds, determined at a solid content of 20.0 %), HIG2 (viscosity = 1.5 to 2.5 seconds, determined at a solid content of 12.2 %), HIG7 (viscosity = 6.0 to 7.9 seconds, determined at a solid content of 12.2 %), and a mixture thereof, all being available from Asahi Kasei Corporation.

### Inorganic particles

The inorganic particle employed in the solvent-borne metallic base coating composition of the present invention may preferably be transparent particulate barium sulfate (1) having a primary particle size of not more than 0.1 µm and/or particulate silica (2) having an average particle size of 2 to 100 µm. Although barium sulfate is listed above as filler pigment for the coating composition of the present invention, the barium sulfate of the inorganic particles is required to have a particle size of not more than 0.1 µm, to distinguish from the filler barium sulfate. In other wordings, the filler pigment should have a primary particle size of more than 0.1 µm. The inorganic particles are formulated into the coating composition of the present invention, in view of improvement of coating appearance, especially unevenness of appearance derived from luster pigment.

The particulate barium sulfate (1) and particulate silica can be employed alone or in combination. In case where the particulate barium sulfate (1) is employed solely, it is contained in the coating composition in an amount of 1 to 20 parts by weight, preferably 3 to 17 parts by weight, based on 100 parts by weight of solid content of the metallic coating composition. Amounts of less than one part by weight deteriorate appearance (unevenness of appearance) and those of more than 20 parts by weight deteriorate surface appearance.

In case where the particulate silica (2) is employed solely, it is contained in the coating composition in an amount of 0.2 to 5.0 parts by weight, preferably 0.6 to 3.0 parts by weight, based on 100 parts by weight of solid content of the metallic coating composition. Amounts of less than 0.2 parts by weight deteriorate appearance (unevenness of appearance) and those of more than 5.0 parts by weight increase viscosity of paint and change its color to reduce coating appearance. In case where the both (1) and (2) are employed, they are used in an amount of each limitation.

The particulate barium sulfate (1) is a transparent particulate pigment based on BaSO₄ and preferably has a primary particle size of not more than 0.1 µm, more preferably 0.001 to 0.08 µm, most preferably 0.01 to 0.05 µm. Primary particle sizes of more than 0.1 µm deteriorate transparency and lustrous appearance.

Examples of the particulate barium sulfate (1) are Barifine BF-1, Barifine BF-10, Barifine BF-20, Barifine BF-40, all available from Sakai Chemical Industries Ltd., in Japan. The particulate barium sulfate (1) may be subjected to pigment dispersing by mixing it with other color pigment.

The particulate silica (2) may preferably be used in the form of high dispersion obtained by mixing silica particles with dispersion resin, solvent and optionally additives to form a silica particle paste and then dispersing it in a dispersion mill using beads.

The particulate silica (2) can preferably be hydrophilic silica particles. In this context, the term "hydrophilic" means silica particles that have bare surface without treating it with a treatment agent for changing to hydrophobic, such as silan coupling agent, organic titanate or the like.

The particulate silica (2) is not limited as long as it mainly contains SiO₂ and has particulate shape and can be obtained by spray-drying method and optional grinding and classifying. It may be either aqueous colloidal silica which is dispersed in water or organosilica sol which is dispersed in organic solvent. The aqueous colloidal silica may include acidic colloidal silica, basic colloidal silica in the form of aqueous dispersion.

The acidic colloidal silica may be commercially available and includes Snowtex O, Snowtex OL, both available from Nissan Chemical Industries Ltd.; Cataloid available from Catalysts and Chemicals Industries Co., Ltd.; SIPERNAT 22SL available from Tegsa Co.; and the like.

The basic colloidal silica can be one that is stabilized by adding small amount of alkali metal ion, ammonium ion or amine, including Snowtex 20, Snowtex 30, Snowtex 40, Snowtex C, Snowtex S, Snowtex 20L and the like, available from Nissan Chemical Industries Ltd.; Cataloid S20L, Cataloid S20H, Cataloid S30L, Cataloid S30H, Cataloid SI-30, Cataloid SI-40, Cataloid SI-50, Cataloid SI-350, Cataloid SI45P, Cataloid SI-80P, Cataloid SA and the like, available from Catalysts and Chamicals Industries Co., Ltd.

The organosilica sol may be aqueous colloidal silica of which water is replaced with hydrophilic organic solvent, such as methanol, ethanol, propanol and ethylene glycol and the like, and include Organosilica Sol MA-ST, Organosilica Sol IPA-ST, available from Nissan Chemical Industries, Ltd. and the like.

The particulate silica (2) that has been dispersed may preferably have an average particle size of 2 to 100 µm, more preferably 3 to 50 µm, most preferably 4 to 20 µm. It also has a maximum particle size of not more than 150 µm, preferably not more than 100 µm.

The particulate silica dispersion paste mentioned above in which silica particles are finely dispersed is formulated into the metallic base coating composition of the present invention and the particles are stably present therein without settling down to elevate viscosity of the composition. This also can inhibit sedimentation of metallic luster pigment in the metallic base coating composition to keep it stably dispersed. If the paste is not sufficiently dispersed, surface appearance would deteriorate.

The dispersion resin for the particulate barium sulfate (1) and particulate silica (2) is not specifically limited, but includes acrylic resin, polyester resin, alkyd resin, epoxy resin, urethane resin or the like.

### Other components

The solvent-borne metallic base coating composition of the present invention may contain another film-forming resin. Examples of the other film-forming resins are not limited thereto, but include acrylic resin, polyester resin, alkyd resin, epoxy resin, urethane resin, or a mixture thereof.

In addition, the solvent-borne metallic base coating composition of the present invention may contain a viscosity modifier. Examples of the viscosity modifiers are crosslinked resin particles, organic bentonite types (such as, organic acid smectite, montmorillonite), inorganic pigment (such as, aluminum silicate, barium sulfate), plate-like pigment having a shape indicating viscosity, and the like.

In addition to the above components, the metallic base coating composition may further contain any additives as adding to paint, such as surface modifier, thickener, anti-oxidant, anti-fluorescent agent, anti-foaming agent and the like. The additives may be added in the composition in an art-known amount.

The metallic base coating composition of the present invention, when applying, may have a solid content of 20 to 45 % by weight, preferably 21 to 40 % by weight. Contents of more than 45 % by weight reduce surface appearance due to too high viscosity and those of less than 20 % by weight deteriorate coating appearance, such as compatibility or ununiformity due to too low viscosity. In addition, the contents outside the above range would reduce paint stability.

The base coating composition may be prepared by art-known methods, but an example includes a method wherein ingredients (e.g. pigment) of paint are mixed or dispersed by SG mill, kneader, roll or the like.

### Clear paint

In the preparation of the composite film of the present invention, a clear coating can be prepared from a clear paint. The clear paint may be a solvent-borne clear paint which comprises a film-forming resin and a curing agent. The film-forming resin is not specifically limited and includes acrylic resin, polyester resin, epoxy resin, urethane resin, and the like, which may be combined with a curing agent, such as amino resin and/or blocked isocyanate compound. In view of transparency or acid-etching resistance, a combination of acrylic resin and an amino resin or an acid-epoxy curing system based on acrylic resin and/or polyester resin can be preferably employed.

The clear paint may preferably have a solid content of 30 to 70 % by weight, more preferably 35 to 65 % by weight, when applying.

Since the clear paint is usually coated on the wet metallic base coating without curing, the clear paint preferably contains viscosity modifier as mentioned for the metallic base coating composition to prevent miscibility, inversion, sagging and the like. An amount of the viscosity modifier may be within the range of 0.01 to 10 parts by weight, preferably 0.02 to 8 parts by weight, more preferably 0.03 to 6 parts by weight, based on 100 parts by weight of resin solid content of the clear paint. Amounts of more than 10 parts by weight deteriorate coating appearance and those of less than 0.01 show insufficient viscosity controlling effects and cause some defects, such as sagging when applying.

The clear paint can be in any form, such as solvent-borne, water-borne (water dissolved, water dispersed or emulsion), non-aqueous dispersion or powder. The clear paint may also contain a curing catalyst, a surface controlling agent and the like.

### Substrate to be coated

The coating composition of the present invention is preferably applied on a substrate made of metal, plastic, foams and the like. Preferred is metal surface or casting surface and more preferred is a metal article which is cationically electrodecoatable.

The metal article may be prepared from iron, copper, aluminum, tin, zinc, an alloy thereof and can be formed by casting. Typical examples of the metal articles are automobile bodies, such as passenger cars, trucks, motorcycles and buses; or parts thereof; and the like. The articles may preferably be chemically treated with phosphate, chromate or the like.

### Preparation of composite film

In the preparation of composite film of the present invention, a substrate to be coated is undertreated with electrocoating etc. and then coated with intermediate paint to cure. Thereafter, it is coated wet-on-wet with solvent-borne metallic base coating composition and clear paint in this order and baked together to cure. According to the present invention, the solvent-borne metallic base coating composition comprises (A) an urea-contained acrylic resin, (B) a urethane-modified polyester resin, (C) a curing agent and (D) a luster pigment as well as optionally (E) a component selected from the group consisting of non-crosslinked polymer particles, anti-settling agent, cellulose derivative, inorganic particles and a mixture thereof.

The undertreatment of the substrate can be conducted by coating an electrocoating composition which is either cation type or anion type. Cation type electrocoating composition is preferred in view of corrosion resistance.

The intermediate paint may contain film-forming resin, curing agent, organic or inorganic color pigment and filler pigment. The intermediate paint not only opacifies the undercoating and ensures surface smoothness which contributes enhancement of coating appearance, but also imparts excellent coating physical properties, such as impact resistance, chipping resistance and the like.

The color pigment of the intermediate paint can be organic pigment or inorganic pigment that is explained in for the solvent-borne metallic base coating composition. The color pigment may be combined with flake-shape pigment, such as aluminum power or mica power.

The intermediate paint is generally gray, containing carbon black and titanium dioxide. It can be a set gray that fits brightness and hue with the upper finish color or may be combined with another color pigment, so-called color intermediate paint.

The film-forming resin for the intermediate paint is not limited, and includes acrylic resin, polyester resin, alkyd resin, epoxy resin, urethane resin and the like. The film-forming resin may be combined with curing agent, such as amino resin and/or blocked isocyanate compound. In view of pigment dispersibility and workability, a combination of alkyd resin and/or polyester resin with amino resin is preferred.

The intermediate paint may preferably have a curing temperature of 100 to 180 °C, more preferably 120 to 160 °C to produce highly-crosslinked coating. Curing temperatures of more than 180 °C make the coated film too hard and fragile and those of less than 100 °C provide insufficient curing. A curing time usually depends on curing temperature, but generally is 10 to 30 minutes at a temperature of 120 to 160 °C.

In case where the solvent-borne metallic base coating composition of the present invention is applied onto an automobile body, coating method can be multi-steps coating, preferably two stages coating, using air electrostatic coating device, or rotating spray type electrostatic coating device using so-call µµ (micro-micro) bell, µ (micro) bell or meta bell.

A dry thickness of the metallic base coating depends on application desired, but may generally be within the range of 5 to 20 µm, preferably 6 to 18 µm. If it is more than 20 µm, some defects, such as unevenness, sagging or pinholes would occur and if it is less than 5 µm, coating appearance, such as lack of hiding or unevenness, would deteriorate.

In the preparation of the composite film of the present invention, the clear paint is coated on the metallic base coating to smoothen and protect roughness or glitter appearance due to luster pigment. The clear paint can be applied by art-known methods as described in the metallic base coating, for example a rotation spray type electrostatic coating apparatus, such as µµ bell or µ bell.

The clear coating layer formed from the clear paint preferably has a dry thickness of 10 to 80 µm, more preferably 20 to 60 µm, although the thickness depends on desired application. If the thickness is more than 80 µm, distinguishability of the coated film would deteriorate and other defects, such as unevenness, pinholes and flow mark, would occur. If it is less than 10 µm, the coating does not hide the undercoating and gives rise to uncovered portions.

The clear paint may preferably be cured at a temperature of 80 to 180 °C, preferably 120 to 160 °C to form highly crosslinked clear film. Temperatures of more than 180 °C make the coated film too hard and fragile and those of less than 80 °C does not have sufficient curing ability. A time for curing depends on curing temperature, but generally is from 10 to 30 minutes at 120 to 160 °C.

The composite film thus obtained preferably has a thickness of 30 to 300 µm, more preferably 50 to 250 µm. Thicknesses of more than 300 µm deteriorate physical properties of coating, such as temperature cycle resistance, and those of less than 30 µm reduce strengthen of coating.

### Examples

The present invention will be explained by the following Examples which, however, are not construed as limiting the scope of the present invention. The term "part" used herein is based on weight, unless otherwise indicated.

### (Example 1)

### Preparation Example 1

### Preparation of urethane modified polyester resin

A 2 L reaction vessel equipped with a nitrogen inlet, a stirrer, a temperature controller, a dropping funnel and a decanter was charged with 334 parts of isophthalic acid, 311 parts of hexahydrophthalic acid, 57 parts of ethylene glycol, 105 parts of trimethylolpropane and 289 parts of neopentyl glycol, and heated to dissolve. Two parts of dibutyltin oxide was added thereto and stirred, while it was slowly heated from 180 to 220 °C over 3 hours, followed by distillation out of water produced. At a temperature of 220 °C, it was kept for another one hour and 20 parts of xylene was slowly added in the reaction vessel to proceed condensation reaction in the presence of solvent. It was then cooled to 100 °C at the time when acid value of resin reached 8 mgKOH/g, and 10 parts of hexamethylene diisocyanate was slowly added for 30 minutes. After holding it for another one hour, 344 parts of xylene, 43 parts of butyl acetate and 43 parts of n-butanol were added to obtain a urethane-modified polyester having a solid content of 70 %, a number average molecular weight of 1,800, a weight average molecular weight of 10,000, an acid value of 6 mgKOH/g and a hydroxyl value of 100.

### Preparation Example 2

### Preparation of acrylic resin

A one litter reaction vessel equipped with a nitrogen inlet, a stirrer, a temperature controller, a dropping funnel and a decanter was charged with 50 parts of xylene and 14 parts of n-butanol and heated to 110 °C. To the content, a solution of 5 parts of styrene, 35.3 parts of ethyl acrylate, 41.1 parts of butyl methacrylate, 15.5 parts of hydroxyethyl acrylate, 3.1 parts of methacrylic acid and 4.0 parts of t-butylperoxy-2-ethyl hexanoate was added dropwise for 3 hours. After another solution of 1.0 part of t-butylperoxy-2-ethyl hexanoate and 6 parts of xylene was added dropwise for 30 minutes, it was kept at 110 °C for one hour to obtain an acrylic resin having a solid content of 60 %, an acid value of 20 mgKOH/g, a hydroxyl value of 75 and a number average molecular weight of 5,000.

### Preparation of solvent-borne metallic base paint

A stainless vessel was charged with 75 parts of AS-9606 (urea-contained acrylic resin having a urea modifying amount of 6.5 %, an acid value 12 mgKOH/g, a hydroxyl value of 70, a weight average molecular weight of 7,000 and Tg of 16 °C, available from Mitsubishi Rayon Co., Ltd.), 14.3 parts of the urethane-modified polyester obtained in Preparation Example 1, 33.9 parts of a pigment dispersion paste (dispersing 2.9 parts of Cyanine Blue G-314 (blue pigment available from Sanyo Color Works, Ltd.) and 6.0 parts of Barifine BF-40 (barium sulfate available from Sakai Chemical Industries, Co., Ltd.) in 25 parts of acrylic resin obtained in Preparation Example 2 and grinding into a particle size of not more than 5 µm), 50 parts of U-ban 20N60 (butylated melamine resin with solid content of 60 %, available from Mitsui Chemicals Co., Ltd.) and 17.8 parts of Alumi-paste 640NS (aluminum pigment of content of 65 %, available from Toyo Aluminum K.K.) and mixed with a table mixer to obtain a light blue solvent-borne metallic base paint 1 (PWC17.0%).

### Formation of composite film

A zinc phosphate-treated dull steel panel having a length 30 cm, a width 40 cm and a thickness 0.8 mm was electrocoated with a cationic electrodeposition paint "V-50" (available from Nippon Paint Co., Ltd.) to form a coating having a thickness of about 20 µm and then baked at 160 °C for 30 minutes to cure. It was then spray-coated with a gray intermediate paint "Orga P-2 Primer" (available from Nippon Paint Co., Ltd.) to form a cured film thickness of about 25 µm and held at room temperature for 3 minutes, followed by curing at 140 °C for 30 minutes to form a substrate to be coated.

The solvent-borne metallic base paint 1 obtained above was diluted with a dilution thinner composed of 10 parts of Solvesso (hydrocarbon solvent available from Exxon Petroleum Co.), 40 parts of ethyl acetate, 40 parts of toluene and 10 parts of butyl acetate to a No. 4 Ford cup viscosity of 12.5 seconds / 20 °C.

The substrate to be coated which had been degreased with solvent was stood perpendicular and coated with the above metallic base paint 1 using a meta bell coater (rotation spray type electrostatic coater available from Ransburg GMBH) by two stages with two minutes interval to form a coating having a dry thickness of 15 µm. It was then held for 4 minutes to form a metallic base coating.

It was then once coated wet-on-wet with a clear paint "Mac Flow -1800" (available from Nippon Paint Co., Ltd.) which was diluted to a No. 4 Ford cup viscosity of 25 seconds/20 °C to form a clear coating having a dry thickness of 35 µm. It was stood perpendicularly and kept for 7 minutes. Thereafter, it was baked at 140 °C for 30 minutes while keeping standing to form a metallic coating by two-coat-one-bake manner.

The resultant metallic coating was evaluated by the following evaluations.

### Flip Flop (FF) properties

The resulting metallic coating is subjected to an angle color difference meter "Multi-Angle Spectrophotometer MA68II" (available from X-Rite Company) to measure F value which is made as evaluation of FF properties.

### Appearance (skin texture)

The finish appearance of the resulting metallic coating is measured by a wave scan (available from Big Chemie - Gardener Co.) and evaluated by a measuring value within a middle wave length range of 800 to 2400 nm (W2 value). The smaller the value, the better the skin appearance.

### Denseness

The resulting metallic coating is evaluated by eyes when it is looked with facing front surface (highlight portion). Criteria are as follow:
3: No particulate appearance of lustrous pigment and excellent lustrous appearance with high denseness.
2: No particulate appearance of lustrous pigment and a little lustrous appearance with high denseness.
3: Some particulate appearance of lustrous pigment and poor lustrous appearance with high denseness.
The result of the evaluations is shown in the following Table 1.

**Table 1**

| | | | Examples | | Comparative Examples | |
|---|---|---|---|---|---|---|
| | | | 1 | 2 | 1 | 2 |
| Amounts of resin ingredients (parts) | AS-9606 (urea-contained acrylic resin, 60 %) | | 75.0 | - | 91.7 | 45.8 |
| | AS-9661 (urea-contained acrylic resin, 60 %) | | - | 75.0 | - | - |
| | Urethane-modified polyester resin (70%) | | 14.3 | 14.3 | - | 39.3 |
| | Acrylic resin (60 %) | | 25.0 | 25.0 | 25.0 | 25.0 |
| | Melamine resin (60 %) | | 50.0 | 50.0 | 50.0 | 50.0 |
| Results of evaluation | Surface texture | FF properties (F value) | 11.0 | 11.1 | 11.2 | 10.1 |
| | | Appearance (W2 value) | 15 | 12 | 31 | 27 |
| | | Denseness | 2-3 | 2-3 | 1 | 1 |
| | | | Spray temperature : 18°C | | | |

### Example 2

A metallic coating 2 was formed, as generally described in Example 1 using amounts shown in Table 1 with exception that AS-9606 employed in Example was changed to 75 parts of AS-9661 (urea-contained acrylic resin having a urea modifying amount of 7.2 %, an acid value 7 mgKOH/g, a hydroxyl value of 75, a weight average molecular weight of 5,100 and Tg of 7 °C, available from Mitsubishi Rayon Co., Ltd.). The same evaluations were conducted and the results are shown in Table 1.

### Comparative Examples 1 to 2

Metallic coating CE1 (Comparative Example 1) and CE2 were formed, as generally described in Example 1 using amounts shown in Table 1. The same evaluations were conducted and the results are shown in Table 1.

The metallic coatings obtained from the solvent-borne metallic base coating paint of the present invention show not only excellent appearance (skin texture) and excellent transparency but excellent lustrous appearance with high denseness looking as uniform dispersion of lustrous pigment, in comparison with conventional medium color coating. The FF properties showing change of metallic appearance depending on angle to be looked by eye are also excellent in comparison with conventional metallic coating.

The following examples show examples in which each component (E) is added in the solvent-borne metallic base coating composition. In order to make comparison clear, same evaluations on Examples 1 and 2 are also described therein.

### Example A1

### Preparation of non-crosslinked polymer particles (1)

### (a) Production of dispersion stabilizing resin

A vessel equipped with a stirrer, a temperature controller and a reflux condenser was charged with 90 parts of butyl acetate. To the content, 20 parts of a monomer solution containing 38.9 parts of methyl methacrylate, 38.8 parts of stearyl methacrylate, 22.3 parts of 2-hydroxyethyl acrylate and 5.0 parts of azobisisobutylonitrile was added and heated with stirring. At 110 °C, the remaining (85 parts) of the monomer solution was added dropwise for 3 hours and then another solution of 0.5 parts of azobisisobutylonitrile and 10 parts of butyl acetate was added dropwise for 30 minutes. The reaction solution was refluxed with stirring for 2 hours to enhance conversion rate to resin and then reaction was finished to obtain an acrylic resin having a solid content of 50 % and a number average molecular weight of 5,600.

### (b) Production of non-crosslinked polymer particles (1)

A vessel equipped with a stirrer, a condenser and a temperature controller was charged with 35 parts of butyl acetate and 60 parts of the acrylic resin obtained in the above (a). To the content, a monomer mixture of 5 parts of styrene, 48.8 parts of ethyl acrylate, 14.1 parts of methyl methacrylate, 2.9 parts of methacrylic acid, 12.1 parts of FM-2 (hydroxyl group-containing monomer available from Daicel Chemical Industries Ltd.), 12.1 parts of 2-hydroxyethyl methacrylate, 5 parts of N-(n-butoxymetnyl) acrylamide and 1.5 parts of azobisisobutylonitrile was added dropwise at 100 °C for 3 hours and then another mixture of 0.1 part of azobisisobutylonitrile and 1 part of butyl acetate was added dropwise for 30 minutes. Reaction was continued another one hour to obtain an emulsion having a solid content of 66 % and a particle size of 0.18 µm. The emulsion was diluted with butyl acetate to obtain a non-crosslinked polymer particle dispersion (1) in butyl acetate having a content of particles of 40 % by weight, a viscosity of 300 cps (25 °C) and a particle size of 0.18 µm.

### Preparation of non-crosslinked polymer particles (2)

A vessel equipped with a stirrer, a condenser and a temperature controller was charged with 35 parts of butyl acetate and 100 parts of the acrylic resin obtained in the above (a). To the content, a monomer mixture of 1.3 parts of methacrylic acid, 18.4 parts of methyl methacrylate, 18.2 parts of ethyl acrylate, 12.2 parts of 2-hydroxyethyl methacrylate and 1.4 parts of azobisisobutylonitrile was added dropwise at 100 °C for 3 hours and then another mixture of 0.1 part of azobisisobutylonitrile and 1 part of butyl acetate was added dropwise for 30 minutes. Reaction was continued another one hour to obtain an emulsion having a solid content of 54 % and a particle size of 0.14 µm. The emulsion was diluted with butyl acetate to obtain a non-crosslinked polymer particle dispersion (2) in butyl acetate having a content of particles of 40 % by weight, a viscosity of 80 cps (25 °C) and a particle size of 0.14 µm.

### Preparation of solvent-borne metallic base paint A1

A stainless vessel was charged with 75 parts of AS-9606 (urea-contained acrylic resin having a urea modifying amount of 6.5 %, an acid value 12 mgKOH/g, a hydroxyl value of 70, a weight average molecular weight of 7,000 and Tg of 16 °C, available from Mitsubishi Rayon Co., Ltd.), 14.3 parts of the urethane-modified polyester obtained in Preparation Example 1, 33.9 parts of a pigment dispersion paste (dispersing 3.2 parts of Cyanine Blue G-314 (blue pigment available from Sanyo Color Works, Ltd.) and 6.6 parts of Barifine BF-40 (barium sulfate available from Sakai Chemical Industries, Co., Ltd.) in 25 parts of acrylic resin obtained in Preparation Example 2 and grinding into a particle size of not more than 5 µm), 50 parts of U-ban 20N60 (butylated melamine resin with solid content of 60 %, available from Mitsui Chemicals Co., Ltd.), 25 parts of non-crosslinked polymer particles (1) obtained above, 19.6 parts of Alumi-paste 7640NS (aluminum pigment of content of 65 %, available from Toyo Aluminum K.K.) and 3 parts of CAB-381-0.5 (cellulose acetate butylate having a viscosity of 0.50 seconds and butylyl group content of 38 %, available from Eastman Chemical Product Co.) and mixed with a table mixer to obtain a light blue solvent-borne metallic base paint 1 (PWC17.0%).

### Formation of composite film

A zinc phosphate-treated dull steel panel having a length 30 cm, a width 40 cm and a thickness 0.8 mm was electrocoated with a cationic electrodeposition paint "V-50" (available from Nippon Paint Co., Ltd.) to form a coating having a thickness of about 20 µm and then baked at 160 °C for 30 minutes to cure. It was then spray-coated with a gray intermediate paint "Orga P-2 Primer" (available from Nippon Paint Co., Ltd.) to form a cured film thickness of about 25 µm and held at room temperature for 3 minutes, followed by curing at 140 °C for 30 minutes to form a substrate to be coated.

The solvent-borne metallic base paint A1 obtained above was diluted with a dilution thinner composed of 10 parts of Solvesso 150 (hydrocarbon solvent available from Exxon Petroleum Co.), 40 parts of ethyl acetate, 40 parts of toluene and 10 parts of butyl acetate to a No. 4 Ford cup viscosity of 12.5 seconds / 20 °C.

The substrate to be coated which had been degreased with solvent was stood perpendicular and coated with the above metallic base paint 1 using a meta bell coater (rotation spray type electrostatic coater available from Ransburg GMBH) by two stages with two minutes interval to form a coating having a dry thickness of 15 µm. It was then held for 4 minutes to form a metallic base coating.

It was then once coated wet-on-wet with a clear paint "Mac Flow -1800" (available from Nippon Paint Co., Ltd.) which was diluted to a No. 4 Ford cup viscosity of 25 seconds/20 °C to form a clear coating having a dry thickness of 35 µm. It was stood perpendicularly and kept for 7 minutes. Thereafter, it was baked at 140 °C for 30 minutes while keeping standing to form a metallic coating by two-coat-one-bake manner.

### Formation of comparative metallic base coating without clear coating

On the substrate to be coated, the solvent-borne metallic base paint A1 was coated as generally above to form a metallic base coating having a thickness of 15 µm. It was then kept perpendicularly for 7 minutes and baked at 140 °C for 30 minutes as it was to form a metallic base coating without clear coating.

The resultant metallic coating was evaluated by the following evaluations.

### Flip Flop (FF) properties

FF properties are determined as described in Example 1.

### Color changing

A color difference (ΔE) between the metallic base coating coated 2-coat-one-bake manner and the metallic base coating without clear coating is measured and the difference value is evaluated as color changing. The smaller the value (color difference) the better the color changing.
The results of evaluations are shown in Table 2.

**Table 2**

| | | | Examples | | | | |
|---|---|---|---|---|---|---|---|
| | | | A1 | A2 | A3 | 1 | 2 |
| Amounts of resin ingredients (parts) | AS-9606 (urea-contained acrylic resin, 60 %) | | 75.0 | - | 75.0 | 75.0 | - |
| | AS-9661 (urea-contained acrylic resin, 60 %) | | - | 75.0 | - | - | 75.0 |
| | Urethane-modified polyester resin (70%) | | 14.3 | 14.3 | 14.3 | 14.3 | 14.3 |
| | Acrylic resin (60 %) | | 25.0 | 25.0 | 25.0 | 25.0 | 25.0 |
| | Non-crosslinked polymer particles (1) | | 25.0 | 25.0 | - | - | - |
| | Non-crosslinked polymer particles (2) | | - | - | 25.0 | - | - |
| | Melamine resin (60 %) | | 50.0 | 50.0 | 50.0 | 50.0 | 50.0 |
| Results of evaluation | Surface texture | FF properties (F value) | 11.1 | 11.4 | 11.2 | 11.4 | 11.8 |
| | | Color changing | 0.0 | 0.0 | 0.1 | 0.4 | 0.3 |
| Spray temperature : 24°C | | | | | | | |

### Example A2

A metallic coating A2 was formed, as generally described in Example A1 using amounts shown in Table 2 with exception that AS-9606 employed in Example was changed to 75 parts of AS-9661 (urea-contained acrylic resin having a urea modifying amount of 7.2 %, an acid value 7 mgKOH/g, a hydroxyl value of 75, a weight average molecular weight of 5,100 and Tg of 7 °C, available from Mitsubishi Rayon Co., Ltd.). For determining color difference (ΔE), a metallic coating A2 without clear over coat was also prepared and the same evaluations were conducted. The results are shown in Table 2.

### Example A3

A metallic coating A3 was formed, as generally described in Example A1 using amounts shown in Table 2 with exception that the non-crosslinked polymer particles (1) employed in Example A1 was changed to 25 parts of the non-crosslinked polymer particles (2). For determining color difference (ΔE), a metallic coating A2 without clear over coat was also prepared and the same evaluations were conducted. The results are shown in Table 2.

### Examples 1 to 2

Metallic coating A3 and A4 were formed, as generally described in Example A1 using amounts shown in Table 2. For determining color difference (ΔE), a metallic coating A3 and A4 without clear over coat were also prepared and the same evaluations were conducted. The results are shown in Table 2.

The metallic coatings obtained from the solvent-borne metallic base coating paint containing the non-crosslinked polymer particles which contain high polar component, such as amide group, show excellent inhibition of miscibility of interface of layers, in comparison with the solvent-borne metallic base coating paint without the non-crosslinked polymer particles, although the both paints are included in the present invention. The metallic coatings A1 to A3 show not only excellent transparency with high brightness but excellent lustrous appearance, in comparison with conventional medium color coating. The FF properties showing change of metallic appearance depending on angle to be looked by eye are also excellent in comparison with conventional metallic coating.

### Example B1

### Preparation of solvent-borne metallic base paint B1

A stainless vessel was charged with 75 parts of AS-9606 (urea-contained acrylic resin having a urea modifying amount of 6.5 %, an acid value 12 mgKOH/g, a hydroxyl value of 70, a weight average molecular weight of 7,000 and Tg of 16 °C, available from Mitsubishi Rayon Co., Ltd.), 14.3 parts of the urethane-modified polyester obtained in Preparation Example 1, 33.9 parts of a pigment dispersion paste (dispersing 2.9 parts of Cyanine Blue G-314 (blue pigment available from Sanyo Color Works, Ltd.) and 6.0 parts of Barifine BF-40 (barium sulfate available from Sakai Chemical Industries, Co., Ltd.) in 25 parts of acrylic resin obtained in Preparation Example 2 and grinding into a particle size of not more than 5 µm), 50 parts of U-ban 20N60 (butylated melamine resin with solid content of 60 %, available from Mitsui Chemicals Co., Ltd.), 17.8 parts of Alumi-paste 7640NS (aluminum pigment of content of 65 %, available from Toyo Aluminum K.K.), 10.0 parts of Dispalon 6840-10X (Polyamide with solid content of 10 %, available from Kusumoto Chemicals Ltd.) and 3 parts of CAB-381-0.5 (cellulose acetate butylate having a viscosity of 0.50 seconds and butylyl group content of 38 %, available from Eastman Chemical Product Co.) and mixed with a table mixer to obtain a light blue solvent-borne metallic base paint 1 (PWC17.0%).

### Formation of composite film

A zinc phosphate-treated dull steel panel having a length 30 cm, a width 40 cm and a thickness 0.8 mm was electrocoated with a cationic electrodeposition paint "V-50" (available from Nippon Paint Co., Ltd.) to form a coating having a thickness of about 20 µm and then baked at 160 °C for 30 minutes to cure. It was then spray-coated with a gray intermediate paint "Orga P-2 Primer" (available from Nippon Paint Co., Ltd.) to form a cured film thickness of about 25 µm and held at room temperature for 3 minutes, followed by curing at 140 °C for 30 minutes to form a substrate to be coated.

The solvent-borne metallic base paint B1 obtained above was diluted with a dilution thinner composed of 10 parts of Solvesso 150 (hydrocarbon solvent available from Exxon Petroleum Co.), 40 parts of ethyl acetate, 40 parts of toluene and 10 parts of butyl acetate to a No. 4 Ford cup viscosity of 12.5 seconds / 20 °C.

The substrate to be coated which had been degreased with solvent was stood perpendicular and coated with the above metallic base paint 1 using a meta bell coater (rotation spray type electrostatic coater available from Ransburg GMBH) by two stages with two minutes interval to form a coating having a dry thickness of 15 µm. It was then held for 4 minutes to form a metallic base coating.

It was then once coated wet-on-wet with a clear paint "Mac Flow -O-1800" (available from Nippon Paint Co., Ltd.) which was diluted to a No. 4 Ford cup viscosity of 25 seconds/20 °C to form a clear coating having a dry thickness of 35 µm. It was stood perpendicularly and kept for 7 minutes. Thereafter, it was baked at 140 °C for 30 minutes while keeping standing to form a metallic coating by two-coat-one-bake manner.

The resultant metallic coating was evaluated by the following evaluations.

### Storage stability

The diluted metallic base paint obtained above is charged in an amount of 400 mL in a 500 mL glass graduated cylinder and kept at 25 °C for 7 days. The cylinder is plugged at an upper portion and turned over 5 times with upside down to slightly mix the paint in the cylinder by movement of air. Thereafter, 100 mL of the supernatant liquid of the paint and 100 mL of the bottom layer of the paint are collected separately. Using each paint thus collected, two metallic composite films are prepared as generally described above and their color difference (ΔE) is measured. The smaller the color difference (ΔE), the better the storage stability.

### Denseness

The resulting metallic coating is evaluated by eyes when it is looked with facing front surface (highlight portion). Criteria are as follow:
3: No particulate appearance of lustrous pigment and excellent lustrous appearance with high denseness.
2: No particulate appearance of lustrous pigment and a little lustrous appearance with high denseness.
3: Some particulate appearance of lustrous pigment and poor lustrous appearance with high denseness.
The result of the evaluations is shown in the following Table 3.

**Table 3**

| | | Examples | | | |
|---|---|---|---|---|---|
| | | B1 | B2 | B3 | 1 |
| Amounts of resin ingredients (parts) | AS-9606 (urea-contained acrylic resin, 60 %) | 75.0 | 75.0 | 75.0 | 75.0 |
| | Urethane-modified polyester resin (70%) | 14.3 | 14.3 | 14.3 | 14.3 |
| | Acrylic resin (60 %) | 25.0 | 25.0 | 25.0 | 25.0 |
| | Melamine resin (60 %) | 50.0 | 50.0 | 50.0 | 50.0 |
| | Dispalon 6840-10X (Polyamide, 10%) | 10.0 | - | - | - |
| | Dispalon 4200-10 (oxidized polyethylene, 10%) | - | 10.0 | - | - |
| | Dispalon NS-5210 (Mixture of polyamide and oxidized polyethylene, 10 %) | - | - | 10.0 | - |
| Results of evaluation | Surface Storage stability (ΔE) texture Denseness | 0.8 | 0.6 | 0.7 | 2.5 |
| | | 4 | 5 | 5 | 3 |
| | | Spray temperature : 28°C | | | |

### Example B2 and B3

A metallic coating B2 was formed, as generally described in Example B1 using amounts shown in Table 3 with exception that Dispalon 6840-10X employed in Example B1 was changed to Dispalon 4200-10 (oxidized polyethylene, 10%) for Example B2 and Dispalon NS-5210 (mixture of polyamide and oxidized polyethylene, 10 %) for Example B3. The same evaluations were conducted and the results are shown in Table 3.

### Example 1

Metallic coating was formed, as generally described in Example B1 using amounts shown in Table 3. The same evaluations were conducted and the results are shown in Table 3.

The metallic coatings obtained from the solvent-borne metallic base coating paint B1, B2 and B3 show not only excellent appearance (skin texture) and excellent transparency but excellent lustrous appearance with high denseness looking as uniform dispersion of lustrous pigment, in comparison with conventional medium color coating. The storage stability of the paint is also excellent and no color change occurs after storage. The FF properties showing change of metallic appearance depending on angle to be looked by eye are also excellent in comparison with conventional metallic coating.

### Example C1

### Preparation of solvent-borne metallic base paint C1

A stainless vessel was charged with 75 parts of AS-9606 (urea-contained acrylic resin having a urea modifying amount of 6.5 %, an acid value 12 mgKOH/g, a hydroxyl value of 70, a weight average molecular weight of 7,000 and Tg of 16 °C, available from Mitsubishi Rayon Co., Ltd.), 14.3 parts of the urethane-modified polyester obtained in Preparation Example 1, 33.9 parts of a pigment dispersion paste (dispersing 2.9 parts of Cyanine Blue G-314 (blue pigment available from Sanyo Color Works, Ltd.) and 6.0 parts of Barifine BF-40 (barium sulfate available from Sakai Chemical Industries, Co., Ltd.) in 25 parts of acrylic resin obtained in Preparation Example 2 and grinding into a particle size of not more than 5 µm), 50 parts of U-ban 20N60 (butylated melamine resin with solid content of 60 %, available from Mitsui Chemicals Co., Ltd.), 17.8 parts of Alumi-paste 7640NS (aluminum pigment of content of 65 %, available from Toyo Aluminum K.K.) and 3 parts of CAB-381-0.5 (cellulose acetate butylate having a viscosity of 0.50 seconds and butylyl group content of 38 %, available from Eastman Chemical Product Co.) and mixed with a table mixer to obtain a light blue solvent-borne metallic base paint C1 (PWC17.0%).

### Formation of composite film

A zinc phosphate-treated dull steel panel having a length 30 cm, a width 40 cm and a thickness 0.8 mm was electrocoated with a cationic electrodeposition paint "V-50" (available from Nippon Paint Co., Ltd.) to form a coating having a thickness of about 20 µm and then baked at 160 °C for 30 minutes to cure. It was then spray-coated with a gray intermediate paint "Orga P-2 Primer" (available from Nippon Paint Co., Ltd.) to form a cured film thickness of about 25 µm and held at room temperature for 3 minutes, followed by curing at 140 °C for 30 minutes to form a substrate to be coated.

The solvent-borne metallic base paint C1 obtained above was diluted with a dilution thinner composed of 10 parts of Solvesso 150 (hydrocarbon solvent available from Exxon Petroleum Co.), 40 parts of ethyl acetate, 40 parts of toluene and 10 parts of butyl acetate to a No. 4 Ford cup viscosity of 12.5 seconds / 20 °C.

The substrate to be coated which had been degreased with solvent was stood perpendicular and coated with the above metallic base paint 1 using a meta bell coater (rotation spray type electrostatic coater available from Ransburg GMBH) by two stages with two minutes interval to form a coating having a dry thickness of 15 µm. It was then held for 4 minutes to form a metallic base coating.

It was then once coated wet-on-wet with a clear paint "Mac Flow -O-1800" (available from Nippon Paint Co., Ltd.) which was diluted to a No. 4 Ford cup viscosity of 25 seconds/20 °C to form a clear coating having a dry thickness of 35 µm. It was stood perpendicularly and kept for 7 minutes. Thereafter, it was baked at 140 °C for 30 minutes while keeping standing to form a metallic coating by two-coat-one-bake manner.

The resultant metallic coating was evaluated by the following evaluations.

### FF properties

FF properties are determined as described in Example 1.

### Denseness

The resulting metallic coating is evaluated by eyes when it is looked with facing front surface (highlight portion). Criteria are as follow:
3: No particulate appearance of lustrous pigment and excellent lustrous appearance with high denseness.
2: No particulate appearance of lustrous pigment and a little lustrous appearance with high denseness.
3: Some particulate appearance of lustrous pigment and poor lustrous appearance with high denseness.
The result of the evaluations is shown in the following Table 4.

**Table 4**

| | | | Examples | | |
|---|---|---|---|---|---|
| | | | C1 | C2 | 1 |
| Amounts of resin ingredients (parts) | AS-9606 (urea-contained acrylic resin, 60 %) | | 75.0 | - | 75.0 |
| | AS-9661 (urea-contained acrylic resin, 60 %) | | - | 75.0 | - |
| | Urethane-modified polyester resin (70%) | | 14.3 | 14.3 | 14.3 |
| | Acrylic resin (60 %) | | 25.0 | 25.0 | 25.0 |
| | Melamine resin (60 %) | | 50.0 | 50.0 | 50.0 |
| | Cellulose acetate butylate CAB-381-0.5 | | 3.0 | 3.0 | - |
| Results of evaluation | Surface texture | FF properties (F value) Denseness | 11.4 | 11.8 | 11.0 |
| | | | 3 | 3 | 2 |
| | | | Spray temperature : 27 °C | | |

### Example C2

A metallic coating C2 was formed, as generally described in Example C1 using amounts shown in Table 3 with exception that AS-9606 employed in Example C1 was changed to AS-9661. The same evaluations were conducted and the results are shown in Table 4.

### Example 1

Metallic coating was formed, as generally described in Example C1 using amounts shown in Table 4. The same evaluations were conducted and the results are shown in Table 4.

The metallic coatings obtained from the solvent-borne metallic base coating paint C1 and C2 show not only excellent appearance (skin texture) and excellent transparency but excellent lustrous appearance with high denseness looking as uniform dispersion of lustrous pigment, in comparison with conventional medium color coating. The FF properties showing change of metallic appearance depending on angle to be looked by eye are also excellent in comparison with conventional metallic coating.

### Example D1

### Preparation of solvent-borne metallic base paint D1

A stainless vessel was charged with 75 parts of AS-9606 (urea-contained acrylic resin having a urea modifying amount of 6.5 %, an acid value 12 mgKOH/g, a hydroxyl value of 70, a weight average molecular weight of 7,000 and Tg of 16 °C, available from Mitsubishi Rayon Co., Ltd.), 14.3 parts of the urethane-modified polyester obtained in Preparation Example 1, 36.7 parts of a pigment dispersion paste (dispersing 3.0 parts of Cyanine Blue G-314 (blue pigment available from Sanyo Color Works, Ltd.) and 8.7 parts of Barifine BF-40 (barium sulfate available from Sakai Chemical Industries, Co., Ltd.) in 25 parts of acrylic resin obtained in Preparation Example 2 and grinding into a particle size of not more than 5 µm), 50 parts of U-ban 20N60 (butylated melamine resin with solid content of 60 %, available from Mitsui Chemicals Co., Ltd.) and 17.8 parts of Alumi-paste 7640NS (aluminum pigment of content of 65 %, available from Toyo Aluminum K.K.) and mixed with a table mixer to obtain a light blue solvent-borne metallic base paint C1 (PWC19.0%).

### Formation of composite film

A zinc phosphate-treated dull steel panel having a length 30 cm, a width 40 cm and a thickness 0.8 mm was electrocoated with a cationic electrodeposition paint "V-50" (available from Nippon Paint Co., Ltd.) to form a coating having a thickness of about 20 µm and then baked at 160 °C for 30 minutes to cure. It was then spray-coated with a gray intermediate paint "Orga P-2 Primer" (available from Nippon Paint Co., Ltd.) to form a cured film thickness of about 25 µm and held at room temperature for 3 minutes, followed by curing at 140 °C for 30 minutes to form a substrate to be coated.

The solvent-borne metallic base paint C1 obtained above was diluted with a dilution thinner composed of 10 parts of Solvesso 150 (hydrocarbon solvent available from Exxon Petroleum Co.), 40 parts of ethyl acetate, 40 parts of toluene and 10 parts of butyl acetate to a No. 4 Ford cup viscosity of 12.5 seconds / 20 °C.

The substrate to be coated which had been degreased with solvent was stood perpendicular and coated with the above metallic base paint 1 using a meta bell coater (rotation spray type electrostatic coater available from Ransburg GMBH) by two stages with two minutes interval to form a coating having a dry thickness of 15 µm. It was then held for 4 minutes to form a metallic base coating.

It was then once coated wet-on-wet with a clear paint "Mac Flow -O-1800" (available from Nippon Paint Co., Ltd.) which was diluted to a No. 4 Ford cup viscosity of 25 seconds/20 °C to form a clear coating having a dry thickness of 35 µm. It was stood perpendicularly and kept for 7 minutes. Thereafter, it was baked at 140 °C for 30 minutes while keeping standing to form a metallic coating by two-coat-one-bake manner.

The resultant metallic coating was evaluated by the following evaluations.

### FF properties

FF properties are determined as described in Example 1.

### Appearance (non-uniformity)

The resulting metallic coating is subjected to a multi-angle color difference meter (Multi-Angle Spectrophotometer MA6811 available from X-Rite Co.) to measure L values at 5 points on the coated surface at a angle of 15 ° against a right opposite position from a light source. An average of the values of the 5 points is calculated to determine a deviation. The smaller the values, the better the uniformity.
The result of the evaluations is shown in the following Table 5.

**Table 5**

| | | | Examples | | |
|---|---|---|---|---|---|
| | | | D1 | D2 | 1 |
| Amounts of resin ingredients (parts) | AS-9606 (urea-contained acrylic resin, 60 %) | | 75.0 | 75.0 | 75.0 |
| | Urethane-modified polyester resin (70 %) | | 14.3 | 14.3 | 14.3 |
| | Acrylic resin (60 %) | | 25.0 | 25.0 | 25.0 |
| | Melamine resin (60 %) | | 50.0 | 50.0 | 50.0 |
| | Barifine BF-40*¹ | | 7.0 | - | - |
| | SIPERNAT 22LS*² | | - | 1.5 | - |
| Results of evaluation | Surface texture | FF properties (F value) | 11.7 | 11.6 | 11.4 |
| | | Appearance (non-uniformity) | 1.2 | 1.2 | 3.5 |
| | | | Spray temperature : 27°C | | |

| | | | | | |
|---|---|---|---|---|---|
| *1 Primary particle size 0.01 µm | | | | | |
| *2 Average particle size 7 µm. | | | | | |

### Example D2

A metallic coating D2 was formed, as generally described in Example D1 using amounts shown in Table 5 with exception that Barifine employed in Example D1 was changed to SIPERNAT 22LS (Colloidal silica available from Tegsa Co.). The same evaluations were conducted and the results are shown in Table 5.

### Example 1

Metallic coating was formed, as generally described in Example D1 using amounts shown in Table 5. The same evaluations were conducted and the results are shown in Table 5.

The metallic coatings obtained from the solvent-borne metallic base coating paint D1 and D2 show not only excellent appearance (uniformity) and excellent transparency but excellent lustrous appearance with high denseness looking as uniform dispersion of lustrous pigment, in comparison with conventional medium color coating. The FF properties showing change of metallic appearance depending on angle to be looked by eye are also excellent in comparison with conventional metallic coating.

## Claims

1. A solvent-borne metallic base coating composition comprising (A) an urea-contained acrylic resin, (B) a urethane-modified polyester resin, (C) a curing agent and (D) a luster pigment, wherein a solid weight ratio of the urea-contained acrylic resin (A) / the urethane-modified polyester resin (B) is within the range of from 60/40 to 95/5.

2. The solvent-borne metallic base coating composition according to claim 1, wherein the curing agent (C) is melamine resin.

3. The solvent-borne metallic base coating composition according to claim 1, further comprising a component (E) selected from the group consisting of non-crosslinked polymer particles, anti-settling agent, cellulose derivative, inorganic particles and a mixture thereof.

4. The solvent-borne metallic base coating composition according to claim 3, wherein the non-crosslinked polymer particles have an average particle size (D50) of 0.05 to 10 µm.

5. The solvent-borne metallic base coating composition according to claim 3, wherein the anti-settling agent is polyamide, oxidized polyethylene and a combination thereof.

6. The solvent-borne metallic base coating composition according to claim 3 wherein the cellulose derivative is selected from the group consisting of cellulose acetate butyrate, nitrocellulose, cellulose acetate, cellulose acetate propionate and a combination thereof.

7. The solvent-borne metallic base coating composition according to claim 3, wherein the inorganic particles are (a) transparent particulate barium sulfate having a primary particle size of not more than 0.1 µm, (b) particulate silica having an average particle size of 2 to 100 µm, or a combination thereof.

8. A process for producing a composite film comprising coating a solvent-borne metallic base coating composition and then a clear paint with wet-on-wet manner on an article to be coated, wherein the solvent-borne metallic base coating composition comprises (A) an urea-contained acrylic resin, (B) a urethane-modified polyester resin, (C) a curing agent and (D) a luster pigment, and a solid weight ratio of the urea-contained acrylic resin (A) / the urethane-modified polyester resin (B) is within the range of from 60/40 to 95/5.

9. The process for producing a composite film according to claim 8, wherein the curing agent (C) is melamine resin.

10. The process for producing a composite film according to claim 8, wherein the solvent-borne metallic base coating composition further comprises a component (E) selected from the group consisting of non-crosslinked polymer particles, anti-settling agent, cellulose derivative, inorganic particles and a mixture thereof.

11. The process for producing a composite film according to claim 10, wherein the non-crosslinked polymer particles have an average particle size (D50) of 0.05 to 10 µm.

12. The process for producing a composite film according to claim 10, wherein the anti-settling agent is polyamide, oxidized polyethylene and a combination thereof.

13. The process for producing a composite film according to claim 10, wherein the cellulose derivative is selected from the group consisting of cellulose acetate butyrate, nitrocellulose, cellulose acetate, cellulose acetate propionate and a combination thereof.

14. The process for producing a composite film according to claim 10, wherein the inorganic particles are (a) transparent particulate barium sulfate having a primary particle size of not more than 0.1 µm, (b) particulate silica having an average particle size of 2 to 100 µm, or a combination thereof.
